# EUROPÄISCHE PATENTSCHRIFT

(11) **EP 2 247 870 B1**
(45) Veröffentlichungstag und Bekanntmachung des Hinweises auf die Patenterteilung: **10.04.2013**
(21) Anmeldenummer: 08871858.0
(22) Anmeldetag: 22.12.2008
(51) Int. Cl.: F16D 69/04, F16D 69/02

(54) **REIBBELAG**
FRICTION LINING
GARNITURE DE FRICTION

(30) Priorität: 31.01.2008 DE 102008007050
(43) Veröffentlichungstag der Anmeldung: 10.11.2010
(73) Patentinhaber: Schaeffler Technologies AG & Co. KG, 91074 Herzogenaurach (DE)
(72) Erfinder: RUNGE, Oliver, 51570 Alt-Windeck (DE); GERBING, Tim-Florian, 57518 Betzdorf (DE); WEYEL, Thorsten, 56459 Willmenrod (DE); SPANDERN, Christian, 57578 Elkenroth (DE)
(86) Internationale Anmeldenummer: PCT/DE2008/002145
(87) Internationale Veröffentlichungsnummer: WO 2009/094968

(56) Entgegenhaltungen:
- EP-A- 1 063 444
- DE-C1- 19 503 738
- US-A- 3 738 901
- US-A1- 2003 116 398

## Beschreibung

Die Erfindung betrifft ein Verfahren zur Herstellung eines Reibbelags insbesondere für eine Reibungskupplung mit einem Reibteil aus gewickeltem Strangmaterial und einem Trägerteil.

Derartige Reibbeläge werden insbesondere für Kupplungsscheiben von Reibungskupplungen in Kraftfahrzeugen verwendet, wobei zwischen metallischen Reibflächen der Reibungskupplung und den Reibbelägen ein Reibschluss, der je nach Betriebsweise der Reibungskupplung haftend oder schlupfend sein kann und ein entsprechendes Moment von einer Antriebseinheit auf einen Abtrieb überträgt.

Wegen der hohen Drehzahlen der Reibungskupplung soll der Reibbelag eine hohe Berstdrehzahl aufweisen. Zur Sicherung eines Langzeitbetriebs soll der Reibbelag verschleißarm sein und dennoch gute Reibwerte aufweisen.

Zur Erhöhung der Berstfestigkeit des Reibbelags ist bereits bekannt, mit einem Bindemittel imprägniertes Strangmaterial aus reibfesten Materialien, beispielsweise Garn, in Umfangsrichtung wellenförmig in mehreren flachen Lagen abzulegen, wobei beispielsweise die Windungen des Strangmaterials elliptisch von Außendurchmesser zu Außendurchmesser unter Bildung von Umkehrbereichen und Freihaltung des Innendurchmessers geführt werden, wobei die Umkehrbereiche von einer Windung zur anderen jeweils über den Umfang winkelversetzt werden. Damit kann der Anteil des Strangmaterials an der Gesamtzusammensetzung des Reibbelags und damit seine Reib- und Berstfestigkeit erhöht werden. Das Wickeln geschieht zumeist mit Hilfe einer Wickelmaschine, wobei pro Umlauf in Umfangsrichtung definitionsgemäß eine Lage gewickelt wird. Die Anzahl der Umkehrbereiche am Außenumfang des Reibbelags wird als Wickelverhältnis bezeichnet. Ein Wickelverhältnis von 1:10 beschreibt beispielsweise, dass das Strangmaterial über einen Umfang zehn Umkehrbereiche am Außenumfang aufweist. Auf diese Weise gewickelte Vorpresslinge werden in einem Heißpressverfahren auf ihre endgültige Form gepresst. Um einen stabilen und formfesten Reibbelag zu erzielen, der die geforderte Laufleistung erträgt, wird dieser in einer empirisch ermittelten Dicke ausgeführt, der neben der über den Betrieb durch Verschleiß abnehmenden Reibschicht eine Tragschicht, die insbesondere eine andere, für die Tragfähigkeit förderliche Wicklung aufweisen kann, enthält.

Insbesondere bei dünnen Reibbelägen können unter Wärmeeinwirkungen Verzüge des Reibbelags auftreten. Es werden daher Trägerbleche verwendet, die nach der Fertigstellung des aus dem heißgepressten Vorpressling gebildeten Reibteils in mehreren Verfahrensschritten mit dem Trägerteil zu einem Reibbelag verklebt werden. EP-A-1 063 444 offenbast ein Verfahren rach den oberbegriff des anspruchs 1.

Für die Erfindung ergibt sich daher die Aufgabe, einen gewickelten Reibbelag vorzuschlagen, der bezüglich seiner Herstellung einfacher und kostengünstiger herstellbar ist.

Die Aufgabe wird durch ein Verfahren nach anspruch 1 gelöst.

Die Verpressung von Trägerteil und Reibteil im Heißpressverfahren erspart eine aufwändige Verklebung der beiden Teile miteinander. Es können daher Arbeitsschritte wie Kleberauftrag, Klebertrocknung und Fügen der abgelüfteten Teile sowie der Materialeinsatz von Klebstoff eingespart werden. Ein dem Verkleben gleichwertiger Schritt während des Heißpressvorgangs ist die Polymerisation von Komponenten des Reibteils beispielsweise des Bindemittels, dass zu einer innigen Verbindung zwischen Reibteil und Trägerteil führt und daher die Verklebung ersetzt.

Der Vorpressling wird aus Strangmaterial gebildet, welches mit Bindemitteln behandelt ist. Dabei wird das bezüglich Reibwert und Verschleiß optimierte Strangmaterial auf ein konstantes Verhältnis von Bindemittel und Strangmaterial gebracht. Das Strangmaterial kann beispielsweise aus Aramidfasern, Glasstapelfasern, Viskosefasern und PAN-Fasern, sowie Messingdraht oder beispielsweise aus Glasfilamenten und Metalldrähten gebildet sein. Die polymeren Komponenten, die im Heißpressverfahren eine weitere Vernetzung oder Polymerisierung, beispielsweise durch Kondensations-, Additions- oder Substitutionsreaktionen erfahren, können aus duroplastischen Komponenten wie beispielsweise Phenolharz oder Melamin-Harz, sowie elastomeren Komponenten wie beispielsweise SBR oder NBR-Kautschuk bestehen. Füllstoffe sind beispielsweise Barium-Sulfat, Kaolin oder Ruß. Das getrocknete Strangmaterial wird anschließend zu einem Vorpressling gewickelt.

Als Trägerteile eignen sich erfindunggemäß Blechteile. Die Trägerteile werden vor dem Verpressen mit dem Vorpressling in vorteilhafter Weise zur Verbindung mit diesem vorbereitet, beispielsweise entfettet und/oder aufgeraut. Alternativ oder zusätzlich kann die Oberfläche zur Verbindung mit dem Bindemittel durch Polymerisationsreaktionen aktiviert, beispielsweise polarisiert oder säurebehandelt werden. Das Trägerteil kann aus Blech gestanzt sein und beispielsweise radial innerhalb des Innenumfangs des ringförmigen Reibteils Laschen mit Öffnungen zur Aufnahme an Flanschteilen der Kupplungsscheibe aufweisen. Beispielsweise können zwei Reibbeläge an den Trägerteilen unter Zwischenlegung von Belagfedersegmenten zusammengelegt und mit einem Flanschteil einer Kupplungsscheibe vernietet werden. Zur axialen Sicherung und Verdrehfestigkeit können nach dem Heißpressvorgang Öffnungen in die Reibbeläge eingebracht werden, durch die die beiden sich gegenüberliegenden Reibbeläge mit den Belagfedersegmenten vernietet werden. Durch den Ersatz der aus Belagmaterial gefertigten Trägerschicht durch ein Trägerteil aus Blech kann der gewickelte Reibbelag wesentlich dünner gestaltet werden.

Nach dem erfinderischen Gedanken werden auf diese Weise hergestellte Reibbeläge weiter optimier, indem der Wärmekoeffizient des Reibteils an die Ausdehnung des Trägerteils angepasst wird. Dies erfolgt in vorteilhafter Weise neben der Abstimmung des Materials in Abhängigkeit von dem Wickelverhältnis des Vorpresslings. Es hat sich gezeigt, dass durch die von dem Wickelverhältnis vorgegebene Ausrichtung der vom Radius und dem Umfang ausgespannten Reibbelagsfläche der einzelnen Stränge des Strangmaterials in radiale oder Umfangsrichtung den Wärmeausdehnungskoeffizienten beeinflusst. Es hat sich weiterhin gezeigt, dass bei Wickelverhältnissen zwischen 1:2 und 1:6 eine besonders gute Abstimmung in Verbindung mit einem Trägerteil aus Blech zu erzielen ist.

In vorteilhafter Weise wird bei der Herstellung im Heißpressverfahren der Vorpressling auf dem Trägerteil zentriert, wobei auf einem Beschickungs- oder Presswerkzeug das Trägerteil am Innenumfang, beispielsweise mittels der Laschen positioniert werden kann und hierzu der Vorpressling am Innen- und Außenumfang auf dem Trägerteil zentriert wird, so dass Innen-und Außenradius des Reibteils mit dem Trägerteil fluchten.

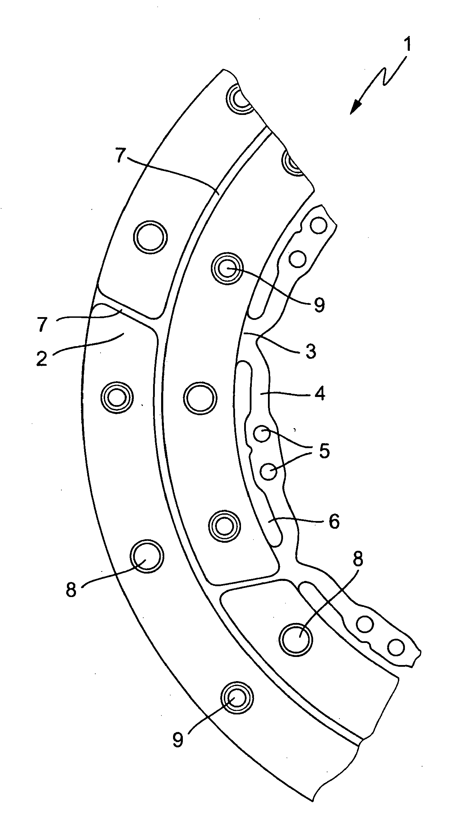

Die Erfindung wird anhand der einzigen Figur näher erläutert. Diese zeigt einen Ausschnitt eines Reibbelags 1 bestehend aus einem Reibteil 2 und einem Trägerteil 3 aus Blech als Ansicht auf das Reibteil 2. Das Trägerteil 3 hat denselben Außendurchmesser wie das Reibteil 2 und weist nach radial innen erweiterte Laschen 4 auf, die mittels Öffnungen 5 an der Kupplungsscheibe aufgenommen werden, beispielsweise mit einem weiteren Reibbelag spiegelbildlich unter Zwischenlegung von Belagfedersegmenten mit einem Flanschteil der Kupplungsscheibe vernietet sind. Die Ausbrüche 6 des vorzugsweise gestanzten Trägerteils 3 dienen einer elastischen Aufnahme der Reibeläge an der Kupplungsscheibe, beispielsweise zum Ausgleich von Taumelschwingungen zwischen der Antriebseinheit und der Getriebeeingangswelle, auf der die Kupplungsscheibe aufgenommen ist.

Das Reibteil 2 ist mittels eines Heißpressverfahrens auf dem Trägerteil 3 aufgenommen und mit diesem mittels Polymerisationsreaktionen des Bindemittels stoffschlüssig verbunden. Während des Heißpressvorgangs wird die Oberflächenform des Reibteils vorgegeben. Hierzu können beispielsweise Nuten 7 in radiale Richtung und/oder in Umfangsrichtung eingeprägt werden. Über den Umfang verteilt sind zwei Sorten angesenkter Öffnungen 8, 9 vorgesehen, die der Vernietung zweier spiegelbildlich angeordneter Reibbeläge 1 mit der Kupplungsscheibe dienen, wobei die breiteren Öffnungen 8 jeweils den Nietkopf und die Öffnungen 9 mit dem kleineren Durchmesser die Nietkrallen einer beidseitig vernieteten Kupplungsscheibe aufnehmen.

Mit diesen Reibbelägen ausgestattete Kupplungsscheiben sind insbesondere für die Anwendung in Doppelkupplungen für Doppelkupplungsbetriebe vorteilhaft, da infolge der verminderten axialen Bauhöhe der Reibbeläge eine Verwendung in engen Bauräumen möglich ist.

### Bezuaszeichenliste

- 1: Reibbelag
- 2: Reibteil
- 3: Trägerteil
- 4: Lasche
- 5: Öffnung
- 6: Ausbruch
- 7: Nut
- 8: Öffnung
- 9: Öffnung

## Patentansprüche

1. Verfahren zur Herstellung eines Reibbelags insbesondere für eine Reibungskupplung bestehend aus einem zumindest aus Strangmaterial und Bindemitteln gefertigten ringförmigen Reibteil und einem kreisringförmigen Trägerteil, wobei das Strangmaterial als gewickelter Vorpressling mit Bindemittel versetzt einem Heißpressverfahren zur Herstellung des Reibteils unterzogen wird, wobei der Vorpressling während des Heißpressverfahrens mit dem Trägerteil verpresst wird, **dadurch gekennzeichnet, dass** das Trägerteil aus Blech gebildet ist, und wobei eine Verbindung zwischen Reibteil und Trägerteil während des Heißpressvorgangs mittels einer Polymerisierung des Bindemittels erzielt wird, und wobei der Wärmekoeffizient des Reibteils in Abhängigkeit von einem Wickelverhältnis des Vorpresslings eingestellt wird.

2. Verfahren zur Herstellung eines Reibbelags nach Anspruch 1, **dadurch gekennzeichnet, dass** das Wickelverhältnis zwischen 1:2 und 1:6 ist.

3. Verfahren zur Herstellung eines Reibbelags nach einem der Ansprüche 1 bis 2, **dadurch gekennzeichnet, dass** das Trägerteil an seinem Innenumfang zentriert und der Vorpressling radial außen und radial innen positioniert und auf das Trägerteil zentriert für den Heißpressvorgang vorbereitet wird.

## Claims

1. Process for producing a friction lining, in particular for a friction clutch, comprising an annular friction part, produced at least from strand material and binders, and an annular carrier part, wherein the strand material, as a wound blank treated with binder, is subjected to a hot-pressing process for the production of the friction part, wherein the blank is pressed together with the carrier part during the hot-pressing process, **characterized in that** the carrier part is formed from sheet metal, and wherein a bond is established between the friction part and the carrier part during the hot-pressing operation by means of polymerization of the binder, and wherein the thermal coefficient of the friction part is set on the basis of a winding ratio of the blank.

2. Process for producing a friction lining as claimed in Claim 1, **characterized in that** the winding ratio is between 1:2 and 1:6.

3. Process for producing a friction lining as claimed in one of Claims 1 to 2, **characterized in that** the carrier part is prepared for the hot-pressing operation centered at its internal circumference, and the blank is prepared for the hot-pressing operation positioned radially on the outside and radially on the inside and centered on the carrier part.

## Revendications

1. Procédé de fabrication d'une garniture de friction, en particulier pour un embrayage à friction constitué d'une partie de friction de forme annulaire fabriquée au moins à partir d'un matériau filiforme et de liants, et d'une partie de support de forme annulaire circulaire, le matériau filiforme en tant qu'ébauche enroulée mélangée avec du liant étant soumis à un procédé de pressage à chaud pour la fabrication de la partie de friction, l'ébauche étant pressée pendant le procédé de pressage à chaud avec la partie de support, **caractérisé en ce que** la partie de support est fabriquée en tôle et une liaison entre la partie de friction et la partie de support est obtenue pendant l'opération de pressage à chaud par polymérisation du liant, et le coefficient thermique de la partie de friction étant ajusté en fonction d'un rapport d'enroulement de l'ébauche.

2. Procédé de fabrication d'une garniture de friction selon la revendication 1, **caractérisé en ce que** le rapport d'enroulement est compris entre 1:2 et 1:6.

3. Procédé de fabrication d'une garniture de friction selon l'une quelconque des revendications 1 à 2, **caractérisé en ce que** la partie de support est centrée sur sa périphérie intérieure et l'ébauche est positionnée radialement à l'extérieur et radialement à l'intérieur et est préparée de manière centrée sur la partie de support en vue de l'opération de pressage à chaud.
